# EUROPÄISCHE PATENTSCHRIFT

(11) **EP 2 811 594 B1**
(45) Veröffentlichungstag und Bekanntmachung des Hinweises auf die Patenterteilung: **24.02.2021**
(21) Anmeldenummer: 14170870.1
(22) Anmeldetag: 03.06.2014
(51) Int. Cl.: H02B 1/30

(54) **Vorrichtung zur Durchführung oder Befestigung von Leitungen in einem Verteilerschrank**
Device for passing or fixing cables in a distribution cabinet
Dispositif destiné au passage ou à la fixation de câbles dans une armoire de distribution

(30) Priorität: 03.06.2013 DE 202013102386 U
(43) Veröffentlichungstag der Anmeldung: 10.12.2014
(73) Patentinhaber: ZweiCom-Hauff GmbH, 73494 Rosenberg (DE)
(72) Erfinder: Hammer, Ralf, 73489 Jagstzell (DE)
(74) Vertreter: König Szynka Tilmann von Renesse Patentanwälte Partnerschaft mbB

(56) Entgegenhaltungen:
- WO-A1-2005/107028
- DE-A1- 10 346 742
- DE-C1- 19 851 952
- DE-C1- 19 961 244
- DE-U1- 7 718 935
- JP-U- S63 198 308
- US-A- 5 422 436

## Beschreibung

Die Erfindung betrifft eine Vorrichtung zur Durchführung von Leitungen, insbesondere Kabel oder Rohre, durch die Wandung eines Verteilerschrankes für die Telekommunikation. Derartige Verteilerschränke können insbesondere auch im Außenbereich Anwendung finden und dienen dem Anschluss lokaler Verteilernetze an Erdkabel, insbesondere an mittels Erdkabel verlegter Lichtwellenleiter. Dazu weisen die Verteilerschränke Komponenten wie beispielsweise Spleißmodule auf, mittels welcher die entsprechenden Faserverbindungen hergestellt werden können. Hierzu ist es erforderlich, die Leitungen nach ihrem Austritt aus dem Erdreich in das Innere des Verteilerschrankes zu führen. Nach dem Stand der Technik werden zu diesem Zweck entweder vor Ort entsprechende Löcher an passender Stelle in die Wandung des Schrankes gebohrt oder vorgefertigte Kunststoff- oder Gummielemente mit Solldurchbruchstellen verwendet. Beiden Varianten gemeinsam ist die vergleichsweise aufwendige Herstellung passender Durchbrüche für die Leitungen vor Ort.

Zum Stand der Technik wird zunächst verwiesen auf die US 5,422,436 mit einem Schrank, in den Kabel durch schienenartige Einsätze im Boden des Schranks eingeführt werden, wobei in den Schienen verschiedene Einsätze für verschiedene Kabeltypen untergebracht werden können. Ferner zeigt die DE 198 51 952 C1 einen Schaltschrank mit verschiedenen schienenartigen Einsätzen in seinem Boden zur abgedichteten Einführung von unterschiedlich dicken Kabeln. Das deutsche Gebrauchsmuster 77 18 935 zeigt einen Kabelverteilerschrank für Baustellen, Campingplätze und Festplätze, unter dessen Boden eine schräg gestellte Platte mit einer Zugentlastungsschiene angebracht ist. Die

DE 199 61 244 C1 zeigt ein Gehäuse zur Aufnahme elektrischer Elemente, das Kabeleinführungselemente mit Abdichtungen in einer Seitenwandung aufweist. Schließlich zeigt die JP S63 198308 U einen Schrank mit offenbar für die Kabeldurchführung vorgesehenen plattenartigen Elementen.

Die WO 2005/107028 A1 zeigt ein Installationsverteilergehäuse, etwa als Einspeisekasten, für Stromkabel, wobei mit Rücksicht auf Kabel besonders dicken Querschnitts mindestens eine Seitenwand mit einer Einführungsplatte für die Kabel um etwa 45° gegen die Richtung eines Stromschienensystems in dem Kasten gedreht ist. Dies kann auch zwei solche Seitenwände betreffen. Auf diesem Dokument beruht der Oberbegriff des Anspruchs 1.

Ferner zeigt die DE 103 46 742 A1 eine Durchführungsvorrichtung zum Durchführen von Kabeln oder Leitungen durch eine Wand, wobei eine Auslassseite dieser Vorrichtung zu deren wandparalleler und damit vertikaler Einlassseite in einem Winkel zwischen 70° und 120° liegen kann.

Aufgabe der vorliegenden Erfindung ist es, eine Verteilervorrichtung anzugeben, welche eine einfache und gegenüber dem Stand der Technik vorteilhafte Realisierung von Durchführungen von Leitungen durch eine Wandung der Vorrichtung ermöglicht.

Diese Aufgabe wird durch die Verteilervorrichtung nach Anspruch 1 gelöst. Die Unteransprüche betreffen vorteilhafte Ausführungsformen und Varianten der Erfindung. Erfindungsgemäß ist die Verteilervorrichtung ein Verteilerschrank.

Gemäß der vorliegenden Erfindung kann eine Durchführung oder Befestigung von Leitungen, insbesondere von Rohren oder Kabeln, in einem Verteilerschrank als sogenanntes Wechselelement ausgebildet sein.

Dabei ist erfindungsgemäß in einer Wandungsfläche des Verteilerschranks ein V-förmiger Eintrittsschacht zur Durchführung von Leitungen ausgebildet, der das Wechselelement aufweist. Diese Wandungsfläche stellt ein Mittelstück des Verteilerschrankes dar. Durch eine derartige V-förmige Ausbildung des Eintrittsschachts wird der Biegeradius der durchgeführten Leitungen vergrößert und somit eventueller Schädigung durch zu starkes Biegen vorgebeugt.

Besonders vorteilhaft ist hier ein als Wechselplatte ausgebildetes Wechselelement zur Durchführung von Leitungen, insbesondere von Kabeln oder Rohren, welche verschiedene Radien von Durchtrittsöffnungen aufweisen kann. Weiterhin können auf einer solchen Wechselplatte auch Durchtrittsöffnungen von nur einem bestimmten Radius vorhanden sein, wobei dieser von Wechselplatte zu Wechselplatte variieren kann. Durch die so gewonnene Flexibilität und damit verbundene Bereitstellung verschiedenster Wechselplatten mit verschiedensten Durchmessern der Durchtrittsöffnungen entfällt das bisherige Durchbohren von Platten oder Wandungen vor Ort im Feld. Die Wechselplatte kann dabei insbesondere unter Verwendung eines Stahlbleches geeigneter Dicke ausgebildet sein. Die Durchtrittsöffnungen können dabei mit Dichtungen, insbesondere mit Gummidichtungen, versehen sein. Vorteilhaft ist es, wenn die Wechselplatten eine rechteckige Grundform aufweisen. Dabei kann die Seitenlänge des Rechtecks für alle Radien von Durchtrittsöffnungen konstant gewählt werden, so dass die Wechselplatten leicht gegeneinander ausgetauscht werden können. Ebenso können Verteilerschränke praktisch ab Werk mit entsprechenden Aufnahmeöffnungen für die Wechselplatten versehen werden, so dass vor Ort lediglich noch die passende Wechselplatte eingesetzt werden muss und ein Durchbohren oder sonstiges Durchbrechen von Wandungen entfällt. Nicht benötigte Aufnahmeöffnungen können mit Blindplatten, also Wechselplatten ohne Durchtrittsöffnungen, verschlossen werden.

Ebenso von Vorteil ist es, wenn das Wechselelement, welches zum Befestigen von Leitungen dient, als Querschiene ausgebildet und beispielsweise über Befestigungslaschen mit einer C-Profilschiene verbunden ist. Die Querschiene kann dabei ebenfalls als flächiges Element ausgebildet sein. Insbesondere können zwei C-Profilschienen vorhanden sein, welche parallel beispielsweise im unteren Bereich des Verteilerschrankes angeordnet sind. Durch eine derartige Verbindung kann gewährleistet werden, dass die Querschiene auf den C-Profilschienen stufenlos verfahrbar ist.

In einer vorteilhaften Ausführung einer oben beschriebenen Querschiene weist diese einen Längsschlitz sowie eine Mehrzahl von Bohrungen, insbesondere Gewindebohrungen, auf. Dadurch ist es möglich, eine Vielzahl von Kabelführungselementen, wie zum Beispiel Hammerkopf-Rohrschellen, Sammelhalter oder sogenannte Kämme zu befestigen, wobei diese Kabelführungselemente sowohl längs der Querschiene wie auch zusammen mit der Querschiene längs der C-Profilsschiene verschiebbar sind und somit eine hohe Anordnungsflexibilität gegeben ist. Vorteilhafterweise ist die Querschiene zum Befestigen von Kabeln oder Rohren senkrecht oder waagerecht zur durch die C-Profilschienen gebildeten Ebene ausgebildet, so dass hier ebenfalls eine hohe Flexibilität in Bezug auf die räumliche Anordnung von Kabelführungselementen gegeben ist.

Der Verteilerschrank kann weiterhin zweiteilig in der Weise aufgebaut sein, dass ein oberer von einem unteren Teil separat zugänglich ist. Dabei kann der obere Teil insbesondere Spleißmodule enthalten, wohingegen der untere Teil auf dem Untergrund steht und beispielsweise - im Falle eines Schrankes für den Außenbereich - aus dem Erdreich austretende Kabel aufnimmt. Dies ist besonders vorteilhaft, da so gewährleistet werden kann, dass eventuelle Verschmutzungen durch Arbeiten an den im unteren Teil des Schrankes verlegten Leitungen den oberen Teil nicht verunreinigen.

Nachfolgend wird die Erfindung anhand der Zeichnung näher erläutert.

### Es zeigen:

- Figur 1: schematisch einen Verteilerschrank,
- Figur2: eine konventionelle Kabeldurchführung,
- Figur 3: exemplarisch drei erfindungsgemäße Wechselplatten,
- Figur 4: eine Kombination unterschiedlicher Wechselplatten,
- Figur 5: die Verwendung von Blindplatten,
- Figur 6: eine weitere vorteilhafte Möglichkeit zur Flexibilisierung der Kabelführung,
- Figur 7: eine exemplarische Querschiene,
- Figur 8: eine weitere exemplarische Querschiene,
- Figur 9: die Verwendung von Hammerkopf-Rohrschellen,
- Figur 10: die Verwendung von Sammelhaltern; und
- Figur 11: eine Variante, bei welcher sogenannte Kämme zur Anwendung kommen.

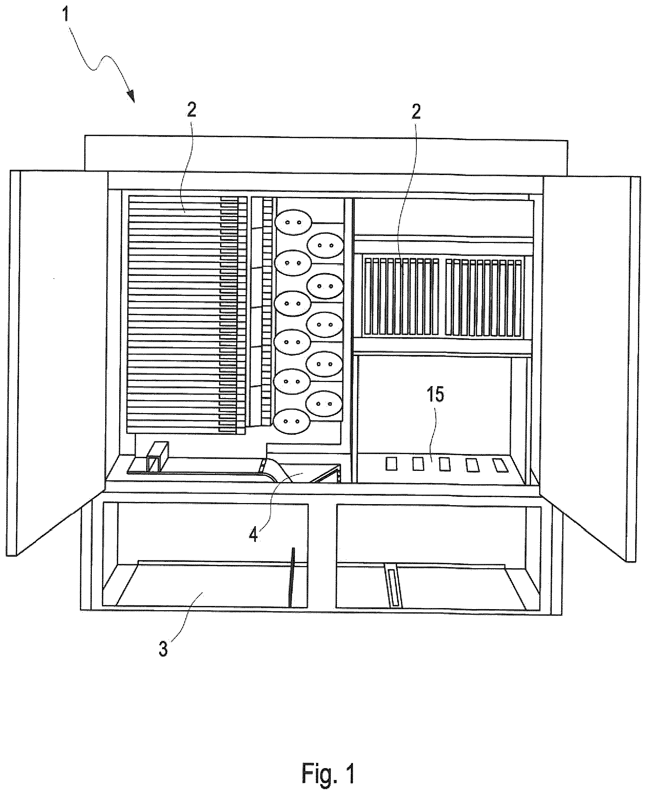

Figur 1 zeigt schematisch einen Verteilerschrank, in welchem die Erfindung verwirklicht werden kann.

Der Verteilerschrank 1 zeigt im dargestellten Beispiel einen zweiteiligen Aufbau mit einem Spleiß- und Patchbereich 2 im oberen Teil sowie einem Unterteil zur Kabeleinführung 3. Der Spleiß- und Patchbereich 2 zeigt in an sich bekannter Weise Spleißmodule sowie Komponenten zur Führung von Kabeln. Im unteren Teil des Spleiß- und Patchbereiches 2 ist ein V-förmiger Eintrittsschacht 4 ausgebildet, durch welchen die Kabel, hier nicht dargestellt, aus dem Unterteil 3 in den Spleiß- und Patchbereich 2 geführt werden können. Ebenfalls gezeigt sind herkömmliche Kabel-Durchführungen 15 in der ebenen Bodenfläche eines Verteilerschrankes 1. Weiterhin sind die hier nicht dargestellten Türen des unteren Teils 3 separat vom oberen Teil 2 zugänglich. So wird ermöglicht, dass eventuell "schmutzige" Arbeiten lediglich im unteren Teil 3 des Verteilerschrankes 1 stattfinden können, ohne den oberen Teil, den Spleiß- und Patchbereich 2, zu verunreinigen.

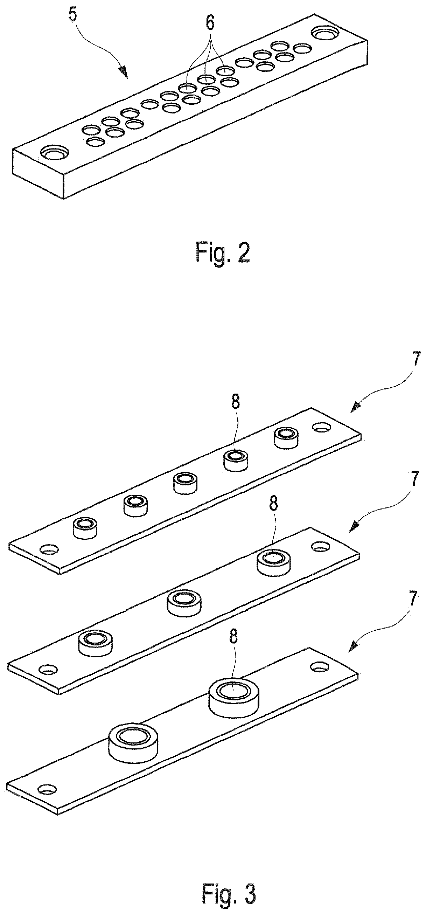

Figur 2 zeigt eine konventionelle Kabeldurchführung 5, wie sie insbesondere im Unterteil des Spleiß- und Patchbereichs 2 zur Durchführung von Lichtwellenleitern oder ähnlichem verwendet werden kann. Die Kabeldurchführung 5 ist aus einem elastischen Material wie beispielsweise einem Hartgummi gebildet und zeigt eine im Wesentlichen quaderförmige Grundform sowie eine Vielzahl von vorbereiteten Durchtrittsbereichen 6 für Kabel, welche bei Bedarf mittels eines geeigneten Werkzeugs geöffnet werden können.

In Figur 3 sind exemplarisch drei erfindungsgemäße Wechselplatten 7 dargestellt. Die Wechselplatten 7 zeigen im dargestellten Beispiel einen metallischen, rechteckigen Grundkörper, welcher mit vorgefertigten Durchtrittsöffnungen 8 versehen ist. Die in Figur 3 gezeigten Wechselplatten 7 zeigen dabei exemplarisch Durchtrittsöffnungen 8 mit drei verschiedenen Radien, um zu verdeutlichen, dass eine Vielzahl derartiger Wechselplatten 7 mit entsprechend vorbereiteten Durchtrittsöffnungen 8 vorgehalten werden kann. Ebenfalls gut erkennbar in Figur 3 ist, dass die Wechselplatten 7 im Hinblick auf ihre Abmessungen, insbesondere auf die Kantenlänge des Grundträgers entsprechend der in Figur 2 gezeigten konventionellen Kabeldurchführung 5, insbesondere entsprechend den Abmessungen der Grundfläche der Kabeldurchführung 5 gestaltet sind. Auf diese Weise wird es möglich, die aus Figur 2 bekannten Elemente gegen die in Figur 3 gezeigten Wechselplatten 7 auszutauschen oder umgekehrt oder auch Kombinationen der gezeigten Elemente zu verwenden.

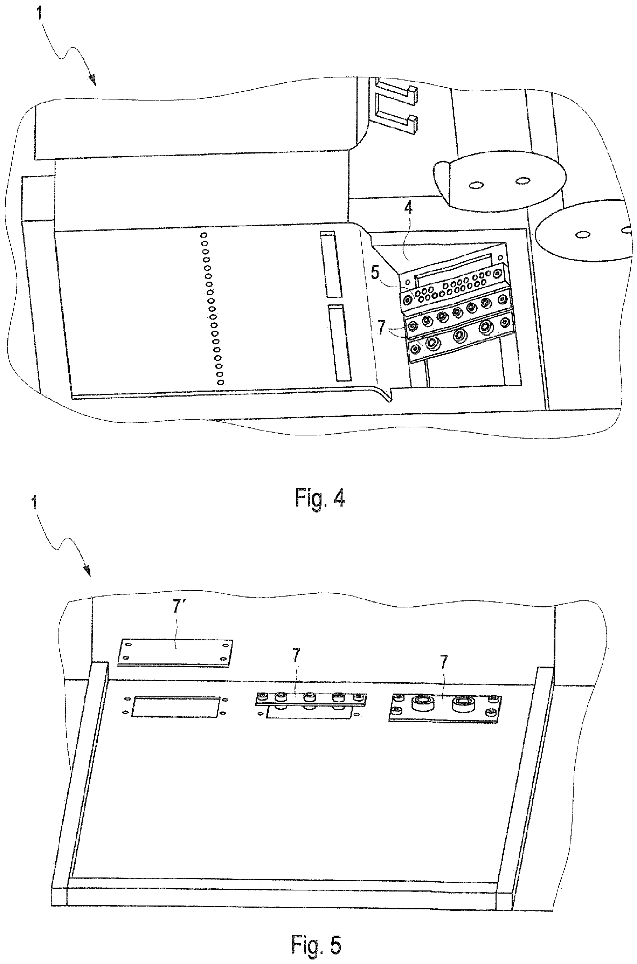

Rein exemplarisch ist eine derartige Kombination in Figur 4 gezeigt; hier wird erkennbar, dass unterschiedliche Wechselplatten 7 bzw. Durchführungen 5 in der V-förmigen Ausnehmung 4 angeordnet werden können.

Eine weitere Ausführungsform ist in Figur 5 gezeigt, wo unterschiedliche Wechselplatten 7 oder bei Nichtgebrauch der Öffnungen auch sogenannte Blindplatten 7', in der ebenen Bodenfläche eines Verteilerschrankes 1 integriert sind.

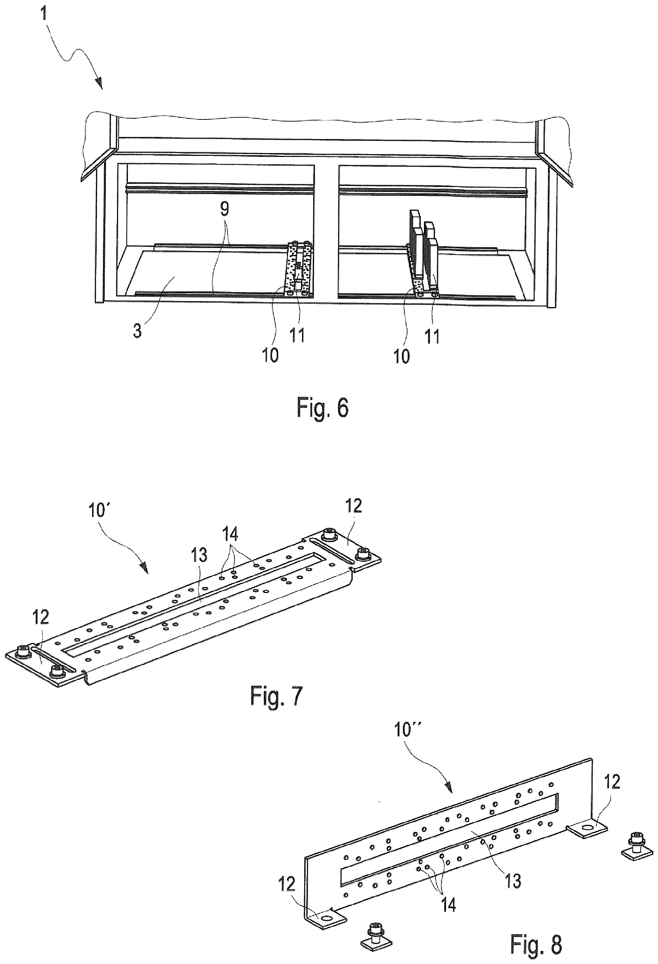

Figur 6 zeigt eine weitere vorteilhafte Möglichkeit zur Flexibilisierung der Kabelführung in Verteilerschränken. Hier sind im Bodenbereich eines Verteilerschrankes 1 angeordnete C-Profilschienen 9 gezeigt, auf welchen Querschienen 10 zur Befestigung von Führungselementen 11 für

Kabel angeordnet sind. Die Querschienen 10 können dabei längs der C-Profilschienen 9 praktisch stufenlos verschoben werden und ermöglichen so eine ausgesprochen flexible Anordnung von Kabelführungselementen 11.

In Figur 7 ist eine exemplarische Querschiene 10' gezeigt, welche im Folgenden als waagrechte Schiene bezeichnet wird. Sie weist zwei Befestigungslaschen 12 mit Schrauben zur Befestigung an den weiter vorne genannten C-Profilschienen 9 sowie einen Längsschlitz 13 und eine Mehrzahl von Bohrungen 14, insbesondere Gewindebohrungen auf.

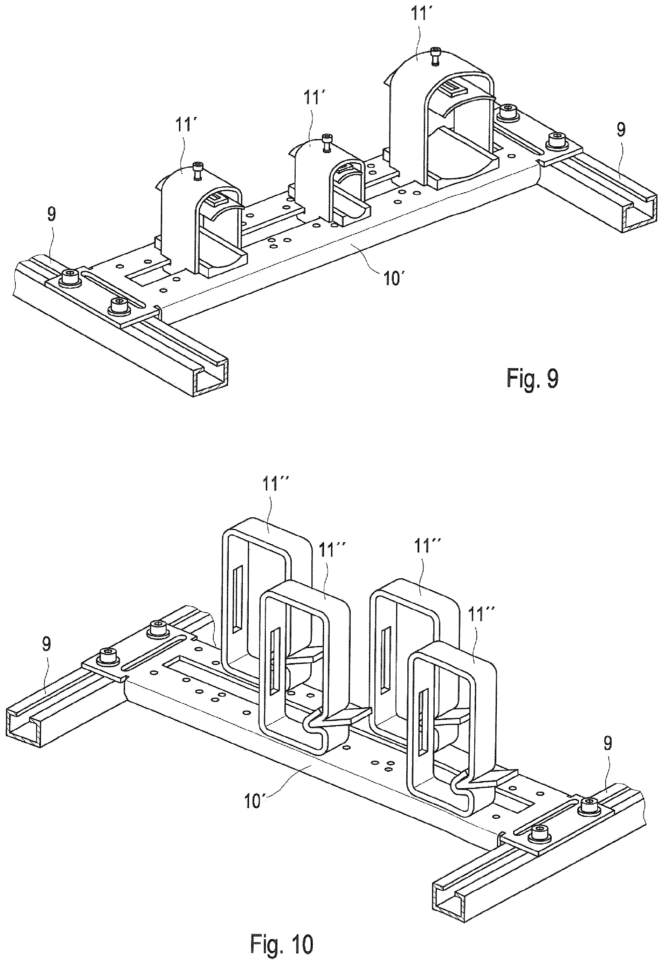

Im Unterschied hierzu ist die in Figur 8 gezeigte Schiene 10" als senkrechte Schiene ausgebildet, welche im Wesentlichen vertikal zur durch die C-Profilschienen 9 gebildeten Ebene verläuft. Bei den Schienen 10' und 10" gemeinsam ist, wie aus Figur 8 erkennbar wird, der Längsschlitz 13 wie auch die Gewindebohrungen 14 und die Befestigungslaschen 12. In den Figuren 9 bis 11 wird erkennbar, welches Ausmaß an Flexibilität im Hinblick auf die Befestigung und Anordnung von Kabelführungselementen 11 das gezeigte modulare Schienensystem bietet. So ist in Figur 9 exemplarisch dargestellt, wie Hammerkopf-Rohrschellen 11' mit einer Querschiene 10' verbunden sind und jeweils zur Führung von einzelnen Kabeln oder auch Bündeln von Kabeln verwendet werden können. Dabei sind die Rohrschellen 11' sowohl längs der Querschiene 10' verschiebbar wie auch zusammen mit der Querschiene längs der C-Profilschienen 9, sodass in der Ebene, welche aus den C-Profilschienen gebildet wird, praktisch jeder Punkt mit einer Rohrschelle angefahren werden kann. Ähnliches gilt für die in Figur 10 dargestellten Sammelhalter 11", welche ebenfalls auf ausgesprochen einfache Weise auf die Querschiene 10' aufgeschraubt werden können.

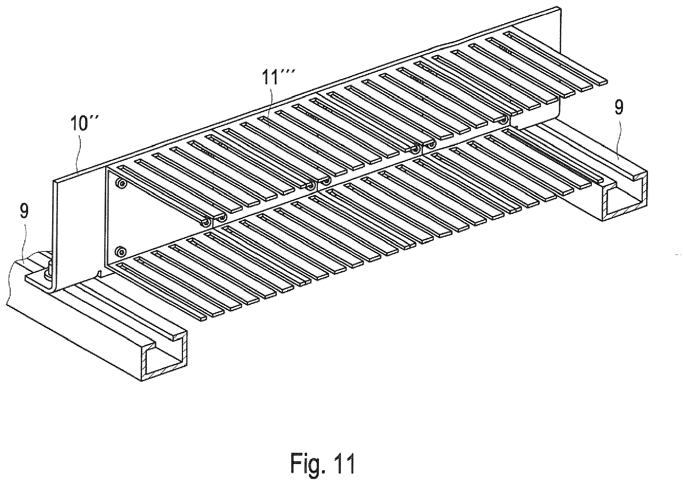

Figur 11 zeigt eine Variante, in welcher sogenannte Kämme 11'" zur Führung von Röhren, in den selbst Kabel geführt werden können, an einer vertikalen Querschiene 10" durch Verschraubung in den Gewindebohrungen 14 befestigt sind. Auch hier wird unmittelbar die einfache und effiziente Führung der Rohre bzw. Kabel deutlich.

Es versteht sich von selbst, dass die gezeigten Konzepte nicht zwingend in Kombination zur Anwendung kommen müssen. Es ist ebenso denkbar, jede der gezeigten erfinderischen Lösungen für sich oder in Unterkombinationen zu verwenden, wie in den beigefügten Ansprüchen definiert.

## Patentansprüche

1. Verteilervorrichtung (1) mit einer Vorrichtung zur Durchführung oder zum Befestigen von Leitungen, insbesondere Rohren oder Kabeln darin, wobei in einer Wandungsfläche der Verteilervorrichtung (1) ein V-förmiger Eintrittsschacht (4) ausgebildet ist, in dem mindestens ein Wechselelement (7, 10) zur Durchführung von Leitungen angeordnet
ist,
**dadurch gekennzeichnet, dass** die Verteilervorrichtung ein Verteilerschrank (1) ist und die Wandungsfläche mit dem V-förmigen Eintrittsschacht (4) ein Mittelstück des Verteilerschranks darstellt.

2. Verteilervorrichtung (1) nach Anspruch 1
**dadurch gekennzeichnet, dass** das Wechselelement als Wechselplatte (7) ausgebildet ist und zur Durchführung von Kabeln oder Rohren mindestens eine Durchtrittsöffnung (8) mit einem definierten Radius aufweist.

3. Verteilervorrichtung (1) nach Anspruch 1
**dadurch gekennzeichnet, dass** das Wechselelement (0) zum Befestigen von Kabeln oder Rohren als Querschiene (10' und 10") zum Befestigen in C-Profilschienen (9) ausgebildet ist.

4. Verteilervorrichtung nach Anspruch 3
**dadurch gekennzeichnet, dass** die Querschienen (10' und 10") über Befestigungslaschen (12) mit den C-Profilschienen (9) verbindbar sind.

5. Verteilervorrichtung nach Anspruch 3 oder 4
**dadurch gekennzeichnet, dass** die Querschienen (10' und 10") zum Befestigen von Kabeln oder Rohren einen Längsschlitz (13) aufweisen.

6. Verteilervorrichtung nach einem der vorangegangenen Ansprüche 3-5
**dadurch gekennzeichnet, dass** die Querschienen (10' und 10") zum Befestigen von Kabeln oder Rohren eine Mehrzahl von Bohrungen (14), insbesondere Gewindebohrungen aufweisen.

7. Verteilervorrichtung nach einem der vorangegangenen Ansprüche 3-6
**dadurch gekennzeichnet, dass** die Querschienen (10' und 10") zum Befestigen von Kabeln oder Rohren senkrecht (10") oder waagerecht (10') zur durch die C-Profilschienen (9) gebildeten Ebene ausgebildet sind.

8. Verteilervorrichtung nach Anspruch 7
**dadurch gekennzeichnet, dass** ein oberer (2) und ein unterer (3) Bereich der Verteilervorrichtung (1) separat voneinander durch Türen zugänglich ist.

## Claims

1. A distribution device (1) having a device for feeding through or the fixation of lines, in particular pipes or cables, therein, wherein a V-shaped entry shaft (4) is formed in a wall surface of the distribution device (1), in which at least one interchangeable element (7,10) for feeding through lines is arranged,
**characterized in that**
the distribution device is a distribution cabinet (1) and the wall surface with the V-shaped entry shaft (4) constitutes an intermediate part of the distribution cabinet.

2. The distribution device (1) according to claim 1,
**characterized in that**
the interchangeable element is designed as an interchangeable plate (7) and has at least one feed-through opening (8) with a defined radius for the feeding through of cables or pipes.

3. The distribution device (1) according to claim 1,
**characterized in that**
the interchangeable element (10) for the fixation of cables or pipes is designed as a cross bar (10' and 10") for the fixation in C-profile rails (9).

4. The distribution device according to claim 3,
**characterized in that**
the cross bars (10' and 10") can be connected to the C-profile rails (9) by fixing attachments (12).

5. The distribution device according to claim 3 or 4,
**characterized in that**
the cross bars (10' and 10") have a longitudinal slot (13) for the fixation of cables or pipes.

6. The distribution device according to one of the preceding claims 3-5,
**characterized in that**
the cross bars (10' and 10") for the fixation of cables or pipes have a plurality of bores (14), in particular threaded bores.

7. The distribution device according to one of the preceding claims 3-6,
**characterized in that**
the cross bars (10' and 10") for the fixation of cables or pipes are designed to be perpendicular (10") or horizontal (10') to the plane formed by the C-profile rails (9).

8. The distribution device according to claim 7,
**characterized in that**
an upper (2) and a lower (3) area of the distribution device (1) are independently accessible through doors.

## Revendications

1. Dispositif de distribution (1) comportant un dispositif permettant le passage ou la fixation de lignes, notamment de tuyaux ou de câbles, dans celui-ci, dans lequel un puits d'entrée en forme de V (4) est conçu dans une surface de paroi du dispositif de distribution (1) et contient au moins un élément de conversion (7, 10) permettant le passage de lignes,
**caractérisé en ce que**
le dispositif de distribution est une armoire de distribution (1) et la surface de paroi présentant le puits d'entrée en forme de V (4) représente une partie centrale de l'armoire de distribution.

2. Dispositif de distribution (1) selon la revendication 1,
**caractérisé en ce que**
l'élément de conversion est conçu sous la forme d'une plaque de conversion (7) et présente, pour le passage de câbles ou de tuyaux, au moins une entrée de passage (8) de rayon défini.

3. Dispositif de distribution (1) selon la revendication 1,
**caractérisé en ce que**
l'élément de conversion (10) est conçu, pour la fixation de câbles ou de tuyaux, sous la forme d'un rail transversal (10' et 10") destiné à être fixé dans des rails profilés en C (9).

4. Dispositif de distribution selon la revendication 3,
**caractérisé en ce que**
les rails transversaux (10' et 10") sont raccordables aux rails profilés en C (9) par le biais de pattes de fixation (12).

5. Dispositif de distribution selon la revendication 3 ou 4,
**caractérisé en ce que**
les rails transversaux (10' et 10") destinés à la fixation de câbles ou de tuyaux présentent une rainure longitudinale (13).

6. Dispositif de distribution selon l'une quelconque des revendications précédentes 3 à 5,
**caractérisé en ce que**
les rails transversaux (10' et 10") destinés à la fixation de câbles ou de tuyaux présentent une pluralité de perforations (14), notamment taraudées.

7. Dispositif de distribution selon l'une quelconque des revendications précédentes 3 à 6,
**caractérisé en ce que**
les rails transversaux (10' et 10") destinés à la fixation de câbles ou de tuyaux sont conçus verticaux (10") ou horizontaux (10') par rapport au plan formé par les rails profilés en C (9).

8. Dispositif de distribution selon la revendication 7,
**caractérisé en ce que**
une zone supérieure (2) et une zone inférieure (3) du dispositif de distribution (1) sont accessibles séparément l'une de l'autre au moyen de portes.
